**Europäisches Patentamt**

**European Patent Office**

**Office européen des brevets**

(11) Publication number: **0 122 816**
**B1**

(12) **EUROPEAN PATENT SPECIFICATION**

(45) Date of publication of patent specification: **18.07.90**

(51) Int. Cl.⁵: **G 11 B 7/08,** G 11 B 13/04,
G 11 B 11/10

(21) Application number: **84302661.8**

(22) Date of filing: **18.04.84**

(54) Optical focus position control in an optical memory system.

(30) Priority: **18.04.83 JP 68771/83**
**19.03.84 JP 53842/84**

(43) Date of publication of application:
**24.10.84 Bulletin 84/43**

(45) Publication of the grant of the patent:
**18.07.90 Bulletin 90/29**

(84) Designated Contracting States:
**DE FR GB IT**

(56) References cited:
**EP-A-0 115 666**
**WO-A-80/01016**
**FR-A-2 425 782**

**PATENTS ABSTRACTS OF JAPAN, vol. 6, no.**
**206 (P-149) 1084r, 19th October 1982; & JP - A -**
**57 113 431 (OLYMPUS KOGAKU KOGYO K.K.)**
**14-07-1982**

**PATENTS ABSTRACTS OF JAPAN, vol. 3, no.**
**107 (E-136), page 147 e 136, 8th September**
**1979; & JP - A - 54 85736 (OLYMPUS KOGAKU**
**KOGYO K.K.) 07-07-1979**

(73) Proprietor: **SHARP KABUSHIKI KAISHA**
**22-22 Nagaike-cho Abeno-ku**
**Osaka 545 (JP)**

(72) Inventor: **Fujii, Yosikazu**
**6-36 Chiyogaoka 2-chome**
**Nara-shi Nara-ken (JP)**
Inventor: **Inui, Tetsuya**
**14 Inyo-cho**
**Nara-shi Nara-ken (JP)**
Inventor: **Deguchi, Toshihisa**
**C-722 Daiyaheights Gakuenmae 2-200-5 Gakuen**
**Daiwa-cho Nara-shi Nara-ken (JP)**
Inventor: **Yamaoka, Hideyoshi**
**2-5-21 Amaminishi**
**Matsubara-shi Osaka-fu (JP)**

(74) Representative: **Wright, Peter David John et al**
**R.G.C. Jenkins & Co. 26 Caxton Street**
**London SW1H 0RJ (GB)**

(56) References cited:
**PATENTS ABSTRACTS OF JAPAN, vol. 4, no. 78**
**(P-14) 560r, page 46 P 14, 6th June 1980; & JP - A**
**- 55 42368 (MITSUBISHI DENKI K.K.) 25-03-1980**

(56) References cited:

PATENTS ABSTRACTS OF JAPAN, vol. 7, no. 51
(P-179) 1196r, 26th February 1983; & JP - A - 57
198 550 (SONY K.K.) 06-12-1982

JAPANESE JOURNAL OF APPLIED PHYSICS,
vol. 19, no. 12, pages 4731-4734, December
1980, Tokyo, JP; N. IMAMURA et al.:
"Experimental study on magneto-optical disk
exerciser with the laser diode and amorphous
magnetic thin films"

PATENTS ABSTRACTS OF JAPAN, vol. 9, no. 2
(P-325) 1725r, 8th January 1985; & JP - A - 59 152
503 (CANON K.K.) 31-08-1984

## Description

The present invention relates to an optical focus position control device for an optical disc apparatus that records, plays back, and/or erases information by irradiating a recording medium with optical beams such as laser beams. The present invention relates particularly, but not exclusively, to an optical focus position control device for an opto-magnetic disc apparatus, the recording medium being of the type which includes a magnetic film.

The surface of optical discs can often vibrate during rotation, and as a result, recording tracks on the disc become displaced in the direction of the optical axis of the incident laser beams that irradiate the disc surface. Also, any deviation between the centre position of the disc and the motor shaft that drives the disc will result in the recording tracks of such a disc being displaced in the direction of the disc radius (hereinafter called the radial direction). To enable the incident laser beam spot to correctly match the recording tracks of a disc a device is provided within the optical head mechanism so that the laser beams focus position can be correctly lined up. Such a device is referred to as an optical focus position control in the following description.

In order to finely adjust the focus position of the incident laser beam to compensate for the disc displacement in the direction of the optical axis of the incident laser beams, a device that can vary the position of the objective lens by electromagnetic means (hereinafter called the focus controller) is well known in existing optical disc apparatus. To finely adjust the focus position of the incident laser beams to compensate for the disc displacmeent in the radial direction, a variety of mechanisms (hereinafter called tracking controllers) that can alter the focus position of the incident laser beams, for instance, via a rotary mirror that reflects the incident laser beams in any optimum direction, have been introduced. However, the above-mentioned tracking control is not practical because the incident laser beams are inevitably reflected from the direction perpendicular to the disc.

Accordingly, a new proposal has been introduced quite recently, which provides a mechanism capable of jointly performing both the focus and tracking controls mentioned above, by varying the position of the objective lens via electromagnetic forces. One such mechanism comprises a coil that can be moved so as to shift an objective lens, and a stationary permanent magnet, thus enabling the objective lens to be displaced by the electromagnetic force generated when a current flows through said coils.

Japanese patent publication 57—113431 discloses another such mechanism. In this known arrangement the objective lens is held in a mounting attached to a cylinder which carries a movable coil extending axially through an annular gap in a fixed magnetic circuit formed by a circular magnet and circular yokes. The lens is by this means driven axially for focus control by electromagnetic forces. Lateral drive for tracking control is also by electromagnetic forces, a stationary driving coil being provided on a fixed yoke, and the lens being mounted in a lens holder of magnetic material; energisation of the driving coil causes lateral movement of the lens for tracking control.

In this latter known mechanism therefore both the focusing and tracking permanent magnet circuits are fixed, and the relative position of the lens holder and yoke/driving coil for tracking movement varies as the lens is driven axially for focus control, thus causing an undesirable change in characteristics of tracking drive.

The present invention aims to avoid this latter problem, and to that end provides an optical focus position control device for controlling the optical focus position of an optical beam directed by an optical means onto an optical disc in an optical disc apparatus, the device comprising:

a main holder;

a tracking control device for shifting the optical means in a tracking direction, that is in a direction substantially parallel to the optical disc, the tracking control device including:

an intermediate holder;

tracking parallel spring means supporting said optical means relative to said intermediate holder for movement of said optical means in said tracking direction; and

electromagnetic tracking drive means for shifting said optical means in said tracking direction; and

a focus control device for shifting said optical means in the focusing direction, that is in a direction along the optical path of said beam, the focus control device including;

focusing parallel spring means supporting said intermediate holder relative to said main holder for movement of said intermediate holder in said focusing direction; and

electromagnetic focus drive means for shifting said intermediate holder in said focusing direction, characterized in that said electromagnetic tracking drive means is mounted so as to be movable wholly with said intermediate holder in said focusing direction. Thus, since the whole of the electromagnetic tracking drive means moves in the focusing direction, the positional relationship between the electromagnetic components of such tracking drive means are not affected by focus control.

Further, problems arising when the known mechanisms capable of jointly performing both the focus and tracking controls by varying the position of the objective lens using electromagnetic forces are applied to an optical disc apparatus, are described below.

Since the proposed mechanism uses magnetism generated by a permanent magnet, a leakage magnetism or flux will be generated in positions peripheral to the disc. Consequently since the disc uses magnetic film for the recording medium, such leakage magnetism will adversely affect said magnetic film, and the following problems may arise:—

(1) When the magnetic disc is irradiated by the laser beams to cause a temperature rise, and simultaneously record information on said disc via external magnetism, if a leakage magnetism from the optical focus position control device is present it may affect the disc, and the quality of the recorded information will be significantly degraded.

(2) When playing back recorded information via the magnetic-optical effect by irradiating the optical magnetic disc with laser beams, any leakage flux from the optical focus position control device may adversely affect the disc, causing the recorded information to be easily erased.

In the light of these potential disadvantages, when an optical disc apparatus is used, it is necessary to minimise the effect of leakage flux from the optical focus position control device on the optical disc.

Preferred further features described herein are directed to solving this problem. Such features are also disclosed in our own published European patent application EP—A—0115666, which is part of the state of the art only by virtue of Article 54(3) EPC, and is therefore not relevant to the question of inventiveness of the present invention. It discloses an optical focus position control device in which a lens cylinder is mounted for axial movement by a focusing electromagnetic drive means in an intermediate holder, a tracking coil being coupled to the intermediate holder and being movable electromagnetically relative to a fixed tracking magnetic circuit including a tracking permanent magnet.

A preferred embodiment of the invention will now be described with reference to the accompanying drawings which are given by way of illustration only, and thus are not limitative of the present invention and wherein:

Figure 1 is a schematic block diagram of an optical disc apparatus;

Figure 2 is a sectional view of an embodiment of an optical focus position control device in accordance with the present invention included in the optical disc apparatus of Figure 1;

Figure 3 is a plan view of parallel springs included in the optical focus position control device of Figure 2;

Figures 4(A) and 4(B) are sectional views for explaining an operational mode of a focus control unit included in the optical focus position control system of Figure 2; and

Figures 5(A), 5(B) and 5(C) are sectional views for explaining an operational mode of a tracking control unit included in the optical focus position control system of Figure 2.

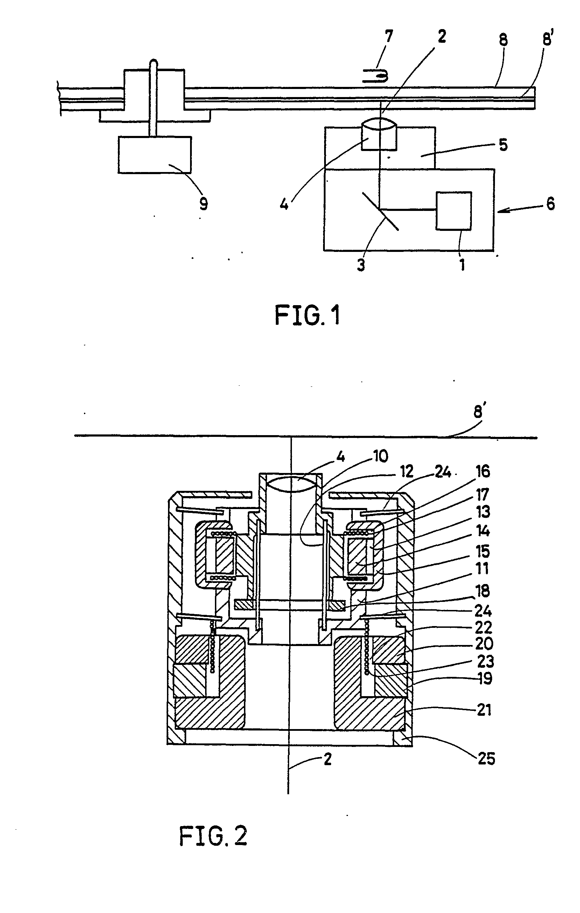

In Figure 1, symbol 1 denoteds a laser beam source that emits laser beams 2. Symbol 3 denotes a mirror, and symbol 4 denotes an objective lens that causes the laser beams 2 to be focussed onto the recording medium surface of a disc. Symbol 5 denotes an optical focus position control device that causes the optical focus position to be accurately positioned with respect to the tracks of the recording medium of a disc by driving an objective lens 4 either in the vertical (up/down) or horizontal (left/right) direction. Symbol 6 denotes an optical head that contains all the optical devices mentioned above. Symbol 7 denotes a recording/erasing coil that provides that surface of the disc recording medium with magnetism while either recording or erasing information. Symbol 8 denotes an optical disc incorporating a disc recording medium 8', and a symbol 9 denotes a motor that drives said optical disc to rotate.

The focus control to be performed by the optical focus position control device 5, i.e., a fine adjustment of the incident laser beam focus position in order the deal with the disc displacement in the direction of the incident laser beam axis, can be achieved by causing the objective lens 4 to move in the direction of the thickness of said optical disc 8. On the other hand, the tracking control to be performed by said optical focus position control device 5, i.e., a fine adjustment of the incident laser beam focus position in order to deal with the disc displacement in the radial direction, can be performed by causing the objective lens 4 to move in the radial direction of the optical disc 8.

First, the tracking control device will be described. In Figure 2 an objective lens-mirror cylinder 10 supports the objective lens 4. The lens-mirror cylinder 10 is mounted on a movable intermediate support member 11 via parallel springs 12 in such a way that the lens-mirror cylinder 10 is movable in the radial (left/right) tracking direction with respect to the intermediate support member 11. A tracking permanent magnet 13, a tracking yoke plate 14 and a tracking yoke 15 are secured to the intermediate support member 11, and form, in combination, a closed magnetic circuit. A tracking magnetic space 16 is provided between the tracking yoke plate 14 and the tracking yoke 15. A tracking drive coil 17 is secured to the lens-mirror cylinder 10 and crosses the tracking magnetic space 16. When the tracking control current is fed to the tracking drive coil 17, magnetism will be generated in the tracking drive coil 17, and as a result, due to interaction with the magnetism generated by the tracking permanent magnet 13, the tracking device coil 17, the lens-mirror cylinder 10, the objective lens 4, and a counter balance 18 are displaced in the radial direction. The counter balance 18 is secured to the bottom of the lens-mirror cylinder 10 so that the tracking drive force is applied to the centre of gravity of the tracking movable element.

The focus control device will now be described below. A focussing permanent magnet 19, a focussing yoke plate 20, and a focussing yoke 21 form, in combination, a closed magnetic circuit. These elements are securely fitted to a stationary holder 15 which fully supports the optical focus position control device. A focussing magnetic space 22 is formed between the focussing yoke plate 20 and the focussing yoke 21. A focus drive coil 23 is secured to the movable intermediate support member 11 and crosses the focussing magnetic space 22. The movable intermediate support member 11 is mounted in the stationary holder 25 via parallel springs 24 in such a way that it is movable in the vertical direction, namely in the direction of the incident laser beam axis, with respect to the stationary holder 25. When the focus control current is fed to the focus drive coil 23, magnetism is generated in the focus drive coil 23, and as a result, due to interaction with the magnetism generated by the focussing permanent magnet 19, the tracking control device supported by the movable intermediate support member 11 is displaced in the focus direction (direction of the incident laser beam axis).

Next, the movement characteristics of both the focussing and tracking controllers of the objective lens-mirror cylinder 10 are described below:

(I) Movement Characteristics of the Tracking Controller

As shown in Figure 2, the tracking controller is driven by the electromagnetic effect which results from the interaction between the tracking closed magnetic circuit secured to the intermediate support member 11 and the tracking drive coil 17 secured to the objective lens-mirror cylinder 10. The intermediate support member 11 and the objective lens-mirror cylinder 10 are connected to each other via the elastic material that is movable only to the left and right, i.e. in the radial direction, for instance by the parallel spring 12 that deflects in the direction of the disc radius. Assuming that the weight of the units movable in the tracking direction (the objective lens 4, the objective lens-mirror cylinder 10, and the tracking drive coil 17) is $M_T$ and the spring constant of the parallel spring 12 moving in the direction of the disc radius is $K_T$, then the radial movement of the objective lens-mirror cylinder 10 will have a resonance frequency $f_T$ which is represented by the formula

$$f_T = \frac{1}{2\pi}\sqrt{\frac{K_T}{M_T}}.$$

When the tracking drive force $F_T$ is generated by the induced electromagnetic force mentioned above, with a frequency denoted by fHz, the movement phase delay caused by the displacement $X_T$ of the objective lens-mirror cylinder 10 in the tracking direction varies from 0° to 90° when $0 < f < f_T$, from 90° to 180° when $f_T < f$, and is $\simeq 180°$ when $f_T \ll f$. When the tracking drive force $F_T$ is generated, the delay in the movement phase caused by the displacement $X_T$ of the objective lens-mirror cylinder 10 moving to the tracking target position $Y_T$ should remain below 180° throughout the frequency band of the tracking control signal. If a phase advancing compensation circuit is used to advance the phase of the tracking drive signal $F_T$, the phase delay can be properly maintained below 180°. This ensures a stable tracking control.

(II) Movement Characteristics of the Focussing Controller

As shown in Figure 2, the focussing controller is driven by the electromagnetic effect that results from the interaction between the focussing closed magnetic circuit secured to the stationary holder 25 and the focussing drive coil 23 secured to the intermediate support member 11. The intermediate support member 11 and the stationary holder 25 are connected to each other via the parallel spring 24 which is deflectable only in the vertical direction, i.e. in the direction of focussing. Assuming that the weight of the movable part in the direction of focussing including the tracking control device is $M_F$, and the spring constant of the parallel spring 24 moving in the direction of focussing is $K_F$, then the movement of the objective lens-mirror cylinder 10 in the vertical direction will have a resonance frequence which is given by the formula

$$f_F = \frac{1}{2\pi}\sqrt{\frac{K_F}{M_F}}$$

(hereinafter called the primary resonance frequency). The intermediate support member 11 and the objective lens-mirror cylinder 10 are connected to each other via the parallel spring 12 which deflects in the tracking direction. However, when the focus driving force is applied to the device, the parallel spring 12 will move slightly in the vertical direction due to its elasticity. Thus, assuming that the spring constant in the focus-direction of the parallel spring 12 is $K'_T$, the spring will have a resonance frequency (hereinafter called the secondary resonance frequency) represented by

$$f'_F = \frac{1}{2\pi}\sqrt{\frac{K'_T}{M_T}}$$

for its movement in the vertical direction. As described above, whenever the objective lens-mirror cylinder 10 moves up and down, both the primary and secondary resonance frequencies will occur. Note that the spring constant $K'_T$ in the vertical direction of the parallel spring 12 is very large, i.e. $K'_T \gg K_F$. This means that the secondary resonance frequency $f'_F$ is significantly higher than the primary resonance frequency $f_F$, i.e. $f'_F \gg f_F$. When a driving force $F_F$ for the focussing operation is generated by the induced electromagnetic force, the movement phase delay in the displacement $X_F$ caused by the objective lens-mirror 10 in the focussing direction will vary from 0° to 90° when $0 < f < f_F$ (where f (Hz) represents a frequency) whereas the delay will vary from 90° to 270° when $f_F < f < f'_F$, and from 270° to 360° when $f'_F < f$. When the focussing drive force $F_F$ is generated, the delay in the movement phase caused by the displacement $X_F$ of the objective lens-mirror cylinder 10 moving to the focussing target position $Y_F$ should remain below 180° throughout the frequency band of the focussing control signal. As described earlier, even if the phase advancing compensation circuit is used to advance the phase of the focussing drive signal $F_F$, since there is a certain limit for advancing the phase amount, the phase cannot be compensated for if it exceeds 180° significantly. To properly compensate for the phase delay, the second resonance frequency $f'_F$ should be set at an optimum level above the frequency band of the focussing control signal. Although the frequency band used for the focussing control signal can vary generally an optical disc apparatus uses frequencies in the range of 1 to 4 KHz. Consequently, experiment has shown that the secondary resonance frequency $f'_F$ should be set at a level above 7 KHz.

Means for designing a construction that fully satisfies the above conditions are described below.

As described above, the secondary resonance frequency $f'_F$ can be determined by the spring constant $K'_T$ of the tracking parallel spring 12 when it moves in the focussing direction and by the weight $M_T$ of the parts which move in the tracking direction. The secondary resonance frequency $f'_F$ becomes large as the sprign constant $K'_T$ becomes large and as the weight $M_T$ becomes small. However, there is a certain limit to the extent by which the weight $M_T$ of the objective lens 4 and the lens-mirror cylinder 10 can be decreased. (Normally, the weight $M_T$ is in the range of 0.5 to 10 grams). The inventors followed up trials for increasing the spring constnt $K'_T$ of the tracking parallel spring 12 during its movement in the vertical direction. The spring constant $K'_T$ was found to be $K'_T/K_T = (X_T/Y_T)^2$ when the tracking parallel spring 12 had a length $X_T$ in the focus direction and a thickness $Y_T$. As a result, it is clear that the spring constant $K'_T$ in the vertical direction (up/down) can be increased by expanding the length $X_T$ and decreasing the thickness $Y_T$ of the parallel spring 12. In the light of the relationship given by

$$\frac{f'_F}{f_T} = \sqrt{\frac{K'_T}{K_T}}$$

the secondary resonance frequency $f'^F$ can be obtained from the equation

$$f'_F = \frac{X_T}{Y_T}$$

$f_T$. It was eventually found that the tracking parallel spring 12 should be designed so that it has a thickness $Y_T$ of 20 to 50 microns and an actual length that is 100 to 500 times the thickness $Y_T$. If the tracking parallel spring 12 can be correctly designed in accordance with the findings described above, the delay in the movement phase caused by the displacement $X_F$ of the objective lens 4 to the focussing target position can be decreased below 180° within the frequency bands available for the focussing control signal. It is important that the phase advancing compensation circuit can be used for correctly compensating for the movement phase delay.

According to the results of the trials undertaken by the inventors, very stable focussing and tracking controls were actually achieved by using a tracking parallel spring 12 made from beryllium-copper alloy having between 30 and 50 microns thickness.

(III) Improvements of Damping Characteristics in the Tracking Control Device and the Focus Control Device

As discussed above in sections (I) and (II), there are two resonance frequencies, $f_F$ and $f_T$, when the tracking control device and the focus control device are operated. If the damping characteristics in the directions of focussing and tracking control remain negligible, the resonance multiple factor in the resonance frequenices $f_F$ and $f_T$ will increase thus readily causing interference vibration to occur during either the focussing or tracking control operation. Also, when a certain frequency above the resonance frequency level is reached, the phase delay in responding to the displacment of the movable parts will be very close to 180°, which will result in an extremely unstable optical focus position control operation. To prevent this and ensure a satisfactory amount of damping the following means are provided:

(III-a) Structure of the Primary Means

The primary improvement includes a latexed damping member painted on the focussing parallel spring and/or the tracking parallel spring. (A rubber plate attached to the metal spring by an adhesive is not suitable for the device, because the spring constant is increased due to the adhesive). To make up the damping material, viscose-elastic materials such as silicon rubber, butyl rubber, silicon-butyl rubber, and acrylic-ethylene rubber, foaming synthetic resin such as foamed polyurethane, and viscose fluid such as silicon grease, can be used.

(III-b) Structure of the Second Means

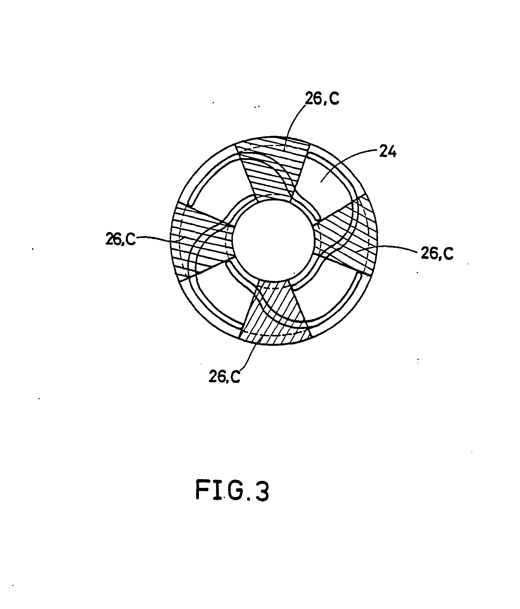

Figure 3 shows a plan view of the focussing parallel spring 24. The focussing parallel spring 24 has a structure that connects two conentric circles, whereby two flat sheet springs, each being connected to four arms at the edges, are provided one in each of the upper and lower positions. The parallel spring 24 moving in the direction of focus causes the intermediate holder 11 to move only in the vertical direction with respect to the stationary holder 25. (See Figure 2). Damping material 26 is bonded to the portions C of the surface of the focussing parallel spring 24, where the largest amount of the relative displacment exists, thus resulting in greater damping characteristics in the direction of focus. To make up the damping material 26, viscose-elastic materials such as silicon-rubber, butyl rubber, silicon-butyl rubber, and acrylic-ethylene rubber, and foaming synthetic resin such as foamed polyurethane, can be used.

## (III-c) Structure of the Third Means

The third improvement is to form the focussing parallel spring and/or the tracking parallel spring from vibration-proof alloy such as manganese-copper alloy, ferro-aluminum alloy, nickel-titanium alloy, and magnesium alloy.

The improvement outlined above in (III-a), (III-b) and (III-c) can be combined with each other to significantly enhance the damping characteristics.

## (IV) Improvement in Connection with Applying the Present Optical Focus Position Controlling Device to an Opto-Magnetic Disc Apparatus

The present invention provides a variety of means for effectively preventing the optical focus position control device from causing its leakage magnetism to adversely affect the recording medium 8' of the optical disc 8. Such effective means are described below.

## (IV-a) Details of Means Related to the Focus Controller

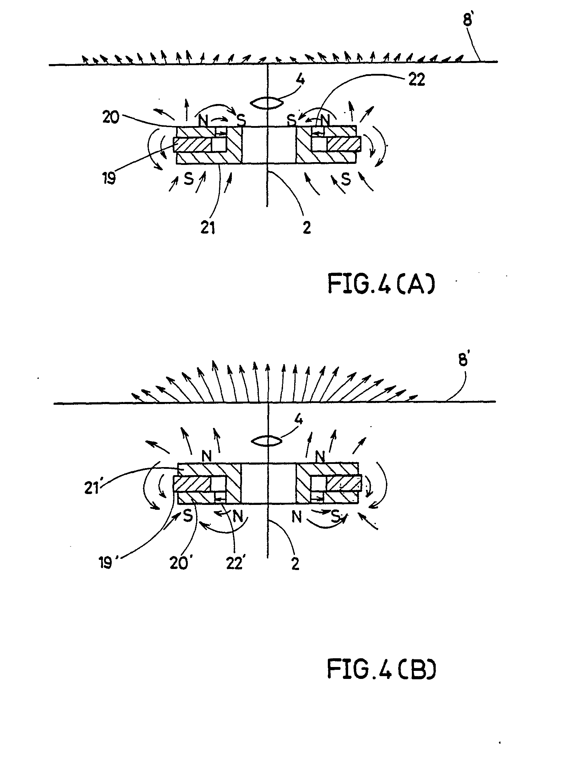

Figure 4(A) shows a sectional view of a focus controller incorporating improvements in accordance with the present invention, whereas Figure 4(B) shows a sectional view of another focus controller which does not incorporate the improved means. Symbols N and S respectively denote the north and south poles. As shown in Figure 4(A), the focus controller incorporating improved means provides the magnetic space 22 available for the focussing operation in a region close to the optical disc. This construction minimises leakage magnetism that would otherwise adversely affect the recording mediium 8' of the optical disc. The leakage magnetism would significantly affect the surface of the recording medium 8' of the optical disc if the magnetic space 22' for the focussing operation were provided in a region remote from the optical disc as shown in Figure 4(B). The length of each arrow in Figures 4(A) and 4(B) denotes the intensity of the leakage magentism at the respective position, while the direction of the leakage magnetism is shown by the direction of the arrows.

## (IV-b) Details of Means Related to the Tracking Controller

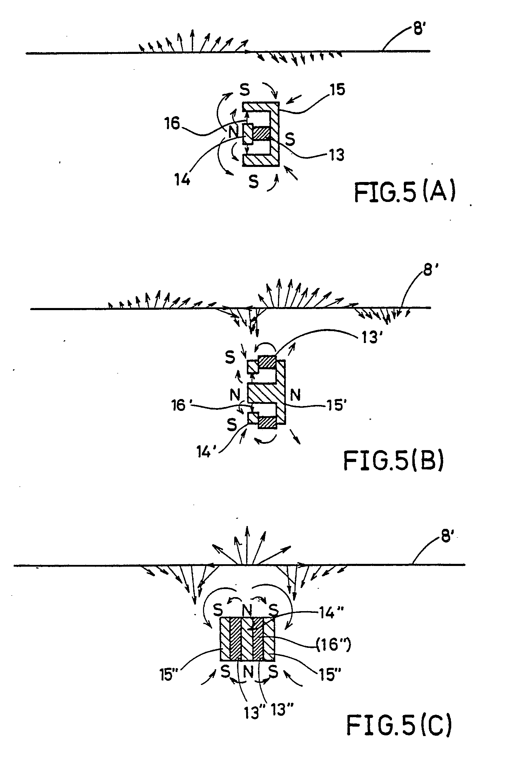

Figure 5(A) shows a sectional view of the tracking controller incorporating improvements according to the present invention, whereas Figures 5(B) and 5(C) show sectional views of other tracking controllers which do not incorporate such improved means. The tracking controller incorporating improved means provides the permanent magnet 13 available for the tracking operation in the centre position of the closed magnetic circuit. This construction minimises leakage magnetism that would otherwise adversely affect the recording medium 8' of the optical disc. In a construction where the permanent magnet 13' available for the tracking operation is provided encircling the closed magnetic circuit as shown in Figure 5 (B), or in such a construction where the open magnetic circuit faces the optical disc as shown in Figure 5(C), if the magnitude of the magnetic field that functions in the magnetic space 16' or 16'' is designed to be equal to that in the magnetic space 16 of Figure 5(A) available for the tracking operation, leakage magnetism will signficantly affect the surface of the recording medium 8' of the optical disc.

## (IV-c) Details of Means for Supporting the Tracking Control Device

If the magnetic field in the tracking magnetic space is selected at a fixed value, the leakage magnetism increases as the width of the gap of the tracking magnetic space increases. Thus, it is preferable for the gap of the tracking magnetic space to be made as narrow as possible. The objective lens must be movable in two dimensions, namely, up/down and left/right. If both the tracking control magnetic circuit and the focus control magnetic circuit are supported by the stationary holder, the tracking coil must be movable in the two dimensions within the tracking magnetic space. This requires a wide magnetic space.

In accordance with the present invention, the tracking magnetic circuit is supported by the movable intermediate holder 11. By this construction, the tracking drive coil 17 is required to move only in the left/right direction within the tracking magnetic space 16. This will effectively minimise the gap of the tracking magnetic space 16, and hence the leakage magnetism.

The embodiments of the invention thus described with reference to the accompanying drawings will obviously be suggestive of derivations and modifications. For example, the focussing and/or tracking means can be applied to any head positioning device for a recording disc, the head being used for recording, playing back or erasing information or for performing any combination of these functions.

## Claims

1. An optical focus position control device for controlling the optical focus position of an optical beam (2) directed by an optical means (4) onto an optical disc (8) in an optical disc apparatus, the device comprising:

a main holder (25);

a tracking control device (11, 12, 13, 14, 15, 16, 17) for shifting the optical means (4) in a tracking direction, that is in a direction substantially parallel to the optical disc, the tracking control device including:

an intermediate holder (11);

tracking parallel spring means (12) supporting said optical means (4) relative to said intermediate holder (11) for movement of said optical means in said tracking direction; and

electromagnetic tracking drive means (13, 14, 15, 16, 17) for shifting said optical means (4) in said tracking direction; and

a focus control device (19, 20, 21, 22, 23, 24) for shifting said optical means in the focusing direction, that is in a direction along the optical path of said beam, the focus control device including

focusing parallel spring means (24) supporting said intermediate holder (11) relative to said main holder (25) for movement of said intermediate holder in said focusing direction; and

electromagnetic focus drive means (19, 20, 21, 22, 23) for shifting said intermediate holder in said focusing direction, characterised in that said electromagnetic tracking drive means (13, 14, 15, 16, 17) is mounted so as to be moveable wholly with said intermediate holder (11) in said focusing direction.

2. An optical focus position control device according to claim 1, wherein said tracking parallel spring means (12) includes a leaf spring which has a length XT in said focusing direction, and a thickness YT, which satisfy the condition:

$$100 \leqq \frac{XT}{YT} \leqq 500$$

3. An optical focus position control device according to claim 1 or claim 2, wherein said tracking parallel spring means includes:

a metal spring element; and

an acrylic ethylene rubber attached to the surface of said metal spring element.

4. An optical focus position control device according to claim 1 or 2, wherein said tracking parallel spring means includes:

a metal spring element; and

latex rubber attached to the surface of said metal spring element.

5. An optical focus position control device according to claim 4, wherein said latex rubber is a latex acrylic-ethylene rubber.

6. An optical focus position control device according to any preceding claim, wherein said tracking parallel spring means (12) includes a spring element made of vibration-proof alloy.

7. An optical focus position control device according to any preceding claim, wherein said focusing parallel spring means includes:

a metal spring element; and

an acrylic-ethylene rubber attached to the surface of said metal spring element.

8. An optical focus position control device according to any one of claims 1 to 6, wherein said focusing parallel spring means includes:

a metal spring element; and

latex rubber attached to the surface of said metal spring element.

9. An optical focus position control device according to claim 8, wherein said latex rubber is a latex acrylic-ethylene rubber.

10. An optical focus position control device according to any preceding claim, wherein said focusing parallel spring means includes a spring element made of vibration-proof alloy.

11. An optical focus position control device according to any preceding claim wherein said electromagnetic tracking device means comprises:

a closed tracking magnetic circuit which includes a tracking permanent magnet (13), a tracking yoke plate (14), a tracking yoke (15), and a tracking magnetic space (16) between said tracking yoke plate (14) and said tracking yoke (15); and

a tracking drive coil (17) arranged to move in said tracking magnetic space (16) relative to said closed tracking magnetic circuit.

12. An optical focus position control device according to claim 11, wherein said closed tracking magnetic circuit is fixedly mounted relative to said intermediate holder (11), and said tracking drive coil (17) is coupled to said optical means.

13. An optical focus position control device according to claim 11 or claim 12, wherein said tracking permanent magnet (13) is disposed in a central position in the closed magnetic circuit, that is to say, on the axis of the drive coil (17).

14. An optical focus position control device according to any preceding claim, wherein said electromagnetic focus drive means comprises:

a closed focusing magnetic circuit which includes a focusing permanent magnet (19), a focusing yoke plate (20), a focusing yoke (21), and a focusing magnetic space (22) between said focusing yoke plate (20) and said focusing yoke (21); and

a focusing drive coil (23) arranged so as to move in said focusing magnetic space (22) relative to said closed focusing magnetic yield.

15. An optical focus position control device according to claim 14 wherein said closed focusing magnetic circuit is fixedly mounted relative to said main holder (25), and said focusing drive coil (23) is coupled to said intermediate holder (11).

16. An optical focus position control device according to claim 14 or claim 15, wherein said closed focusing magnetic circuit is arranged so that the part of said magnetic circuit closest to the optical disc includes the focusing magnetic space (22).

**Patentansprüche**

1. Optische Focussiereinrichtung für einen durch ein optisches Element (4) auf eine optische abtastbare Scheibe (8) gerichteten Strahl (2) mit:

einem Hauptträger (25);

einer Spurfolgeeinrichtung (11, 12, 13, 14, 15, 16, 17) zur Bewegung der optischen Einrichtung (4) in Spurrichtung, d.h. in einer Richtung parallel zur optischen Scheibe, wobei die Spurfolgeeinrichtung folgende Baugruppen aufweist:

— einen Zwischenträger (11);

— eine spurparallele federbelastete Einrichtung (12), die die optische Einrichtung (4) bei der Bewegung in Spurrichtung relativ zu dem Zwischenträger (11) hält; und

— eine elektromagnetische Antriebseinrichtung (13, 14, 15, 16, 17) zur Bewegung der optischen Einrichtung (11) in Spurrichtung; sowie

eine Focussier-Steuereinrichtung (19, 20, 21, 22, 23, 24) zur Verschiebung der optischen Einrichtung in Focussierrichtung, d.h. in Richtung der optischen Achse des Strahles, wobei die Focussier-Steuereinrichtung eine federbelastete Einrichtung (24) zur Parallelführung des Focus' aufweist, die den Zwischenträger (11) relativ zum Hauptträger (25) zur Bewegung des Zwischenträgers in Focussierrichtung hält; und

eine electromagnetische Antriebseinrichtung (19, 20, 21, 22, 23), die den Zwischenträger in Focussierrichtung bewegt, dadurch gekennzeichnet, daß die electromagnetische Antriebsvorrichtung (13, 14, 15, 16, 17) zur Spurverfolgung so angebracht ist, daß sie im Ganzen mit dem Zwischenträger (11) in Focussierrichtung beweglich ist.

2. Vorrichtung nach Anspruch 1, dadurch gekennzeichnet, daß die parallele Spurfolgeeinrichtung (12) eine Blattfeder mit einer Länge XT in Focussierrichtung und einer Dicke YT aufweist, die die folgende Bedingung erfüllt:

$$100 \leq \frac{XT}{YT} \leq 500$$

3. Vorrichtung nach Anspruch 1 oder 2, gekennzeichnet durch eine parallele Spurfolgeeinrichtung mit:

einen metallischen Federelement und einen an der Oberfläche dieses metallischen Federelements angebrachten Acryl-Ethylen-Gummi.

4. Vorrichtung nach Anspruch 1 oder 2, gekennzeichnet durch eine parallele Spurfolgeeinrichtung mit:

einem metallischen Federelement un einem an der Oberfläche des metallischen Federelements angebrachten Latexgummi.

5. Vorrichtung nach Anspruch 4, gekennzeichent durch eine Latex-Acryl-Ethylen-Gummi.

6. Vorrichtung nach einem der vorhergehenden Ansprüche dadurch gekennzeichnet, daß die parallele Spurfolgeeinrichtung (12) ein Federelement aus einer vibrationsfesten Legierung aufweist.

7. Vorrichtung nach einem der vorhergehenden Ansprüche, gekennzeichnet durch eine parallele Focussiereinrichtung mit:

einem metallischen Federelement und einem an der Oberfläche des metallischen Federelements angebrachen Acryl-Ethylen-Gummi.

8. Vorrichtung nach einem der Ansprüche 1 bis 6, gekennzeichnet durch eine parallele Focussiereinrichtung mit:

einem metallischen Federelement und einem an der Oberfläche des metallischen Federelements angebrachten Latexgummi.

9. Vorrichtung nach Anspruch 8, gekennzeichnet durch einen Latex-Acryl-Ethylen-Gummi.

10. Vorrichtung nach einem der vorhergenden Ansprüche, dadurch gekennzeichnet, daß die parallele Focussiereinrichtung ein Federelement aus einer vibrationsfesten Legeirung aufweist.

11. Vorrichtung nach einem der vorhergehenden Ansprüche, gekennzeichnet durch eine electromagnetische Spurfolgeeinrichtung mit:

einem geschlossenen magnetischen Kreis aus einem Permanentmagneten (13), einer Jochplatte (14), einem Joch (15) und einem magnetischen Spalt (16) zwischen der Jochplatte (14) und dem Joch (15); und

einer Antriebsspule (17), die in dem magnetischen Spalt (16) relativ zu dem geschlossenen magnetischen Kreis bewegbar ist.

12. Vorrichtung nach Anspruch 11, dadurch gekennzeichnet, daß der geschlossenen magnetische Kreis relativ zu dem Zwischenträger (11) fest moniert ist, und daß die Antreibsspule (17) mit der optischen Einrichtung verbundent ist.

13. Vorrichtung nach Anspruch 11 oder 12, dadurch gekennzeichnet, daß der Permanentmagnet (13) in einer zentralen Lage des geschlossenen magnetischen Kreises, d.h. auf der Achse der Antriebsspule (17) angeordnet ist.

14. Vorrichtung nach einem der vorhergehenden Ansprüche, gekennzeichnet durch eine elektromagnetische Focussiereinrichtung mit:

einem geschlossenen magnetischen Focussierkries, der durch einen Permanentmagneten (19), eine Jochplatte (20), ein Joch (21) und einen magnetischen Focussierspalt (22) zwischen der Jochplatte (20) und dem Joch (21) gebildet wird; und

einer Antriebsspule (23), die so angeordnet ist, daß sie relativ zu dem geschlossenen magnetischen Focussierkries in dem Magnetspalt (22) bewegbar ist.

15. Vorrichtung nach Anspruch 14, dadurch gekennzeichnet, daß der geschlossene magnetische Focussierkreis relativ zum Hauptträger (25) festmontiert ist, und daß die Antriebsspule (23) mit dem Zwischenträger (11) gekoppelt ist.

16. Vorrichtung nach Anspruch 14 oder 15, dadurch gekennzeichnet, daß der geschlossene magnetische Focussierkreis so angeordnet ist, daß der Teil dieses Kreises, der am nächsten zur optischen Scheibe liegt, den magnetischen Focussierspalt (22) aufweist.

## Revendications

1. Dispositif de commande de la position d'un foyer optique servant à commander la position du foyer optique d'un faisceau optique (2) dirigé par un moyen optique (4) sur un disque optique (8) dans un appareil à disque optique, le dispositif comprenant:

un support principal (25);

un dispositif de commande de suivi (11, 12, 13, 14, 15, 16, 17) servant à décaler le moyen optique (4) dans une direction de suivi, qui est sensiblement parallèle au disque optique, le dispositif de commande de suivi incluant:

un support intermédiaire (11);

un moyen en forme de ressort parallèle (12) servant à réaliser le suivi et supportant ledit moyen optique (4) par rapport audit support intermédiaire (11) pour le déplacement dudit moyen optique dans ladite direction de suivi; et

un moyen (13, 14, 15, 16, 17) d'entraînement électromagnétique pour le suivi, servant à déplacer ledit moyen optique (4) dans ladite direction de suivi; et

un dispositif (19, 20, 21, 22, 23, 24) de commande du foyer, servant à déplacer ledit moyen optique dans la direction de focalisation, c'est-à-dire dans une direction s'étendant le long du trajet optique dudit faisceau, le dispositif de commande du foyer comprenant:

un moyen formant ressort parallèle (24) utilisé pour la focalisation et supportant ledit support intermédiaire (11) par rapport audit support principal (25) pour le déplacement dudit support intermédiaire dans ladite direction de focalisation; et

un moyen (19, 20, 21, 22, 23) d'entraînement électromagnétique du foyer servant à déplacer ledit support intermédiaire dans ladite direction de focalisation, caractérisé en ce que ledit moyen (13, 14, 15, 16, 17) d'entraînement électromagnétique de suivi est monté de maînère à être déplaçable complètement avec ledit support intermédiaire (11) dans ladite direction de focalisation.

2. Dispositif de commande de la position d'un foyer optique selon la revendication 1, dans lequel ledit moyen formant ressort parallèle (12) utilisé pour le suivi comprend un ressort en forme de lame qui possède.une longeur XT dans ladite direction de focalisation et une épaisseur YT, qui satisfont à la condition:

$$100 \leqq \frac{XT}{YT} \leqq 500$$

3. Dispositif de commade de la position d'un foyer optique selon la revendication 1 ou 2, dans lequel ledit moyen formant ressort parallèle untilisé pour le suivi inclut:

un élément de ressort métallique; et

du caoutchouc éthylène-acrylique fixé à la surface dudit élément de ressort métallique.

4. Dispositif de commande de la position d'un foyer optique selon la revendication 1 ou 2, dans lequel ledit moyen formant ressort parallèle utilisé pour le suivi inclut:

un élément de ressort métallique; et

du caoutchouc latex fixé à la surface dudit élément de ressort métallique.

5. Dispositif de commande de la position d'un foyer optique selon la revendication 4, dans lequel ledit caoutchouc latex est un caoutchouc latex-acrylique.

6. Dispositif de commande de la position d'un foyer optique selon l'une quelconque des revendications précédentes, dans lequel ledit moyen formant ressort parallèle (12) utilisé pour le suivi inclut un élément de ressort réalisé en un alliage résistant aux vibrations.

7. Dispositif de commande de la position d'un foyer optique selon l'une quelconque des revendications précédentes, dans lequel moyen formant ressort parallèle utilisé pour la focalisation inclut:

un élément de ressort métallique; et

du caoutchouc éthylène-acrylique fixé à la surface dudit élément de ressort métallique.

8. Dispositif de commande de la position d'un foyer optique selon l'une quelconque des revendications 1 à 6, dans lequel ledit moyen formant ressort parallèle utilissé pour la focalisation comprend:

un élément de ressort métallique; et

du caoutchouc latex fixé à la surface dudit élément de ressort métallique.

9. Dispositif de commande de la position d'un foyer optique selon la revendication 8, dans lequel ledit caoutchouc latex est un caoutchouc latex éthylène-acrylique.

10. Dispositif de commande de la position d'un foyer optique selon l'une quelconque des revendications précédentes, dans lequel ledit moyen formant ressort parallèle utilisé pour la focalisation inclut un élément de ressort réalisé en un alliage résistant aux vibrations.

11. Dispositif de commande de la position d'un foyer optique selon l'une quelconque des revendications précédentes, dans lequel ledit moyen d'entraînement électromagnétique de suivi comprend:

un circuit magnétique de suivi fermé, qui inclut un aimant permanent de suivi (13), une plaque de culasse de suivi (14), une culasse de suivi (15) et un entrefer magnétique de suivi (16) situé entre ladite plaque de culasse de suivi (14) et ladite culasse du suivi (15); et

une bobine d'entraînement de suivi (17) agencée de manière à se déplacer dans ledit entrefer magnétique de suivi (16) par rapport audit circuit magnétique de suivi fermé.

12. Dispositif de commande de la position d'un foyer optique selon la revendication 11, dans lequel ledit circuit magnétique de suivi fermé est monté de façon fixe sur ledit support intermédiaire (11), et ladite bobine d'entraînement du suivi (17) est accouplée audit moyen optique.

13. Dispositif de commande de la position d'un foyer optique selon la revendication 11 ou 12, dans lequel ledit aimant permanent de suivi (13) est disposé dans une position centrale dans le circuit magnétique fermé, c'est-à-dire sur l'axe de la bobine d'entraînement (17).

14. Dispositif de commande de la position d'un foyer optique selon l'une queconque des revendications précédentes, dans lequel ledit moyen d'entraînement électromagnétique du foyer comprend:

un circuit magnétique de focalisation fermé, qui inclut un aimant permanent de focalisation fermé, qui inclut un aimant permanent de focalisation (19), une plaque de culasse de focalisation (20), une culasse de focalisation (21) et un entrefer magnétique de focalisation (22) situé entre ladite plaque de culasse de focalisation (20) et ladite culasse de focalisation (21); et

une bobine d'entraînement de focalisation (23) agencée de manière à se délacer dans ledit entrefer magnétique de focalisation (22) par rapport audit circuit magnétique de focalisation fermée.

15. Dispositif de commande de la position d'un foyer optique selon la revendication 14, dans lequel ledit circuit magnétique de focalisation fermé est monté de façon fixe par rapport audit support principal (25), et ladite bobine d'entraînement de focalisation (23) est accouplée audit support intermédiaire (11).

16. Dispositif de commande de la position d'un foyer optique selon la revendication 14 ou 15, dans lequel ledit circuit magnétique de focalisation fermé est agencé de telle sorte que la partie dudit circuit magnétique la plus proche du disque optique inclut l'entrefer magnétique de focalisation (22).

FIG.1

FIG.2

1

FIG.3

FIG.4 (A)

FIG.4 (B)

FIG.5 (A)

FIG.5(B)

FIG.5(C)